# EUROPÄISCHE PATENTSCHRIFT

(11) **EP 3 203 829 B1**
(45) Veröffentlichungstag und Bekanntmachung des Hinweises auf die Patenterteilung: **04.12.2019**
(21) Anmeldenummer: 15778249.1
(22) Anmeldetag: 02.10.2015
(51) Int. Cl.: A01F 7/06, A01F 12/28

(54) **VORRICHTUNG ZUM BEARBEITEN VON ERNTEGUT UND VERFAHREN ZUM STEUERN EINES ERNTEGUTFLUSSES IN DER VORRICHTUNG**
DEVICE FOR PROCESSING HARVESTED CROPS AND METHOD FOR CONTROLLING THE FLOW OF A HARVESTED CROP IN THE DEVICE
DISPOSITIF POUR TRAITER UN PRODUIT RÉCOLTÉ ET PROCÉDÉ POUR COMMANDER UN FLUX DE PRODUIT RÉCOLTÉ DANS CE DISPOSITIF

(30) Priorität: 10.10.2014 DE 102014114717
(43) Veröffentlichungstag der Anmeldung: 16.08.2017
(73) Patentinhaber: Kemmner, Hartmut, 04886 Beilrode (DE)
(72) Erfinder: Kemmner, Hartmut, 04886 Beilrode (DE)
(74) Vertreter: Witte, Weller & Partner Patentanwälte mbB
(86) Internationale Anmeldenummer: PCT/EP2015/072779
(87) Internationale Veröffentlichungsnummer: WO 2016/055364

(56) Entgegenhaltungen:
- DE-U1-202013 007 813
- US-A1- 2011 320 087
- US-A1- 2013 137 492

## Beschreibung

Die Erfindung betrifft eine Vorrichtung zum Bearbeiten von Erntegut, insbesondere eine Dresch- und/oder Abscheidevorrichtung, mit einem Rotor, der drehbar um seine Längsachse gelagert ist, und einer Abscheideeinrichtung mit einem Abscheideeinrichtungsbereich, der einen in einem betriebsbereiten Zustand der Vorrichtung unterhalb der Längsachse angeordneten unteren Umfangsbereich des Rotors zumindest teilweise umgibt und radial beabstandet zu dem Rotor angeordnet ist, wobei zwischen dem Abscheideeinrichtungsbereich und dem unteren Umfangsbereich des Rotors ein Durchlassbereich für das Erntegut ausgebildet ist, und wobei sich der Abscheideeinrichtungsbereich zumindest in einem Teilbereich des Rotors entlang der Längsachse erstreckt.

Ferner betrifft die Erfindung einen Mähdrescher mit einer Vorrichtung der oben genannten Art.

Darüber hinaus betrifft die vorliegende Erfindung ein Verfahren zum Steuern eines Erntegutflusses in einer Vorrichtung zum Bearbeiten von Erntegut, insbesondere einer Dresch- und/oder Abscheidevorrichtung, wobei die Vorrichtung einen Rotor, der drehbar um seine Längsachse gelagert ist, und eine Abscheideeinrichtung mit einem Abscheideeinrichtungsbereich aufweist, der einen in einem betriebsbereiten Zustand der Vorrichtung unterhalb der Längsachse angeordneten unteren Umfangsbereich des Rotors zumindest teilweise umgibt und radial beabstandet zu dem Rotor angeordnet ist, wobei zwischen dem Abscheideeinrichtungsbereich und dem unteren Umfangsbereich des Rotors ein Durchlassbereich für das Erntegut ausgebildet ist, und wobei sich der Abscheideeinrichtungsbereich zumindest in einem Teilbereich des Rotors entlang der Längsachse erstreckt.

Zur Ernte von Körnerfrüchten wie insbesondere Getreide, aber auch Raps, Sonnenblumen, Ackerbohnen, Grassamen oder Ähnlichem, werden sog. Mähdrescher eingesetzt. Bei dem Erntevorgang werden die Körnerfrüchte mit einem entsprechenden Schneidwerk bzw. Erntevorsatz zunächst abgemäht oder abgepflückt. Bei einem anschließenden Dreschvorgang werden die Körner mit Hilfe eines sog. Dreschwerks ausgedroschen und von anderen Pflanzenbestandteilen getrennt. Von dem Dreschwerk gelangt das Erntegut zur Abscheidung in einen sog. Absiebebereich, in dem das lose Gemisch von Pflanzenbestandteilen und den restlichen Körnern durch Windsichtung und/oder Absieben weiter getrennt wird. Die Körner werden nach einem Reinigungsvorgang in einen Korntank befördert. Die übrigen Pflanzenbestandteile werden ausgeschieden und verbleiben beispielsweise auf dem Feld.

Das Dreschwerk kann beispielsweise quer zu einer Arbeitsrichtung des Mähdreschers angeordnet sein. Ein derartiges Dreschwerk wird als Tangentialdreschwerk bezeichnet. Das Dreschwerk weist üblicherweise einen Dreschkorb auf, in dem sich eine Dreschtrommel, die mit sog. Schlagleisten versehen ist, mit hoher Geschwindigkeit dreht. Die Dreschtrommel ist mit einem radialen Abstand zu dem Dreschkorb angeordnet, so dass zwischen der Dreschtrommel und dem Dreschkorb ein enger Dreschspalt ausgebildet ist. Die Körnerfrüchte werden in diesem Dreschspalt ausgerieben, so dass ein loses Gemisch aus Körnern und anderen Pflanzenbestandteilen bereitgestellt wird, das in weiteren Arbeitsschritten voneinander getrennt wird.

Bei einer weiteren Variante, dem sog. Axialflussdreschwerk, ist wenigstens ein Rotor in Arbeitsrichtung des zugehörigen Mähdreschers angeordnet. Der Dreschkorb ist radial beabstandet zu dem Rotor angeordnet und umgibt zumindest teilweise einen unteren Umfangsbereich des Rotors. Dabei ist der Rotor beispielsweise mit diagonal verlaufenden Schlagleisten besetzt. Das Erntegut wird durch die Drehbewegungen des Rotors ausgerieben. Den hierfür notwendigen Widerstand leistet der den unteren Teil des Rotors umgebende Abscheidebereich zwischen dem Rotor und der Abscheideeinrichtung.

Zur Regulierung der Abscheidung in einer derartigen Vorrichtung ist es bekannt, beispielsweise einen radialen Abstand zwischen Rotor/Dreschtrommel und Dreschkorb zu verstellen, um die Trennung von Korn und anderen Pflanzenbestandteilen zu beeinflussen. Nachteilig bei diesem Verfahren ist, dass gerade bei Erntegütern mit einem relativ hohen Kornanteil und geringen anderen Pflanzenbestandteilen erhöhte Kornverluste auftreten, da die Gesamtmasse, die zum Ausreiben der Körner notwendig ist, zu gering ist. Aufgrund der zu geringen Gesamtmasse werden die Körner nur teilweise ausgerieben bzw. die Abscheideflächen der Vorrichtung werden nur teilweise mit Erntegut beschickt. Wird der Dreschspalt zwischen dem Rotor und dem Dreschkorb stark verringert, um die Kornverluste zu reduzieren, so führt dies zu Leistungseinbußen der Vorrichtung. Mit anderen Worten wird damit die erreichbare Ernteleistung reduziert.

Bei bekannten Dresch- bzw. Abscheidevorrichtungen treten insbesondere am Anfang und am Ende jedes Dreschvorgangs (z.B. beim Umdrehen des Mähdreschers am Feldende) erhöhte Kornverluste und/oder Leistungseinbußen auf, da sich in dieser Betriebssituation die Dresch- und/oder Abscheidevorrichtung fast vollständig entleert und damit die Gesamtmasse des Ernteguts nicht ausreichend ist, um die Körner effizient auszureiben. Verstärkt wird dieses Problem bei Erntegütern, die sehr geringe Pflanzenbestandteile aufweisen. Infolge der geringen Pflanzenbestandteile wird in dem Dreschspalt nicht der notwendige Widerstand aufgebaut, der für ein effizientes Ausreiben der Körner erforderlich ist.

Die Druckschrift US 2013/0137492 A1 beschreibt ein System zum Verarbeiten von Erntegut. Insbesondere sind verstellbare Leitbleche zum Regeln des Erntegutflusses in dem Dreschmechanismus eines Mähdreschers beschrieben.

Die Druckschrift US 2011/0320087 A1 beschreibt ein verstellbares Leitblech eines Dreschkorbs für ein Dreschsystem eines landwirtschaftlichen Mähdreschers. Insbesondere sind ein System und eine Methode beschrieben zur Fernsteuerung eines verstellbaren Leitblechs eines Dreschkorbs, beispielsweise der Steigungswinkel von diesem, während des Betriebs des Dreschsystems, zum Verbessern des Dreschertrags und anderen Betriebsparametern.

Die Druckschrift DE 20 2013 007 813 U1 beschreibt eine Abscheidevorrichtung eines Mähdreschers, die aus einem Dreschbereich und einem Abscheidebereich besteht. Der Dreschbereich und Abscheidebereich werden von einem Gehäuse umschlossen, dessen Unterseite einen Dreschkorb und einen Abscheidekorb umfasst, und dessen Oberseite eine Abdeckhaube darstellt, die an der Innenseite mit Leitschienen besetzt ist. Die Leitschienen bestehen jeweils aus einem starr angeordneten Leitelement und einem hieran direkt anschließenden, um eine Achse verschwenkbaren Endstück.

Es ist daher die Aufgabe der vorliegenden Erfindung, eine Vorrichtung zum Bearbeiten von Erntegut anzugeben, die die Kornverluste verringert und die im Wesentlichen zu keinen Leistungseinbußen der Vorrichtung führt.

Ferner ist es die Aufgabe der vorliegenden Erfindung, einen Mähdrescher mit einer derartigen Vorrichtung anzugeben.

Darüber hinaus ist es die Aufgabe der vorliegenden Erfindung, ein Verfahren zum Steuern eines Erntegutflusses in einer Vorrichtung zum Bearbeiten von Erntegut anzugeben, bei dem geringere Kornverluste und im Wesentlichen keine Leistungseinbußen der Vorrichtung auftreten.

Diese Aufgabe wird bei der eingangs genannten Vorrichtung zum Bearbeiten von Erntegut dadurch gelöst, dass die Vorrichtung ferner zumindest ein Steuerelement aufweist, das an dem Abscheideeinrichtungsbereich angeordnet ist, wobei das zumindest eine Steuerelement in den Durchlassbereich und/oder in eine entlang der Längsachse gebildete axiale Projektion des Durchlassbereichs hineinbewegbar ist, um einen Erntegutfluss zu steuern. Der Abscheideeinrichtungsbereich weist zumindest ein Korbelement auf, das eine Mehrzahl von Abscheideöffnungen aufweist. Das Steuerelement ist von einer Außenseite der Abscheideeinrichtung durch zumindest eine der Abscheideöffnungen in den Durchlassbereich und/oder in die axiale Projektion des Durchlassbereichs hineinbewegbar.

Ferner wird die obige Aufgabe durch einen Mähdrescher gelöst, der eine Vorrichtung der oben genannten Art aufweist.

Ferner wird die obige Aufgabe durch ein Verfahren der eingangs genannten Art gelöst, wobei die Vorrichtung ferner zumindest ein Steuerelement aufweist, das an dem Abscheideeinrichtungsbereich angeordnet ist, und wobei das Verfahren aufweist: Hineinbewegen des zumindest einen Steuerelements in den Durchlassbereich und/oder in eine entlang der Längsachse gebildete axiale Projektion des Durchlassbereichs, um den Erntegutfluss zu steuern. Der Abscheideeinrichtungsbereich weist zumindest ein Korbelement auf, das eine Mehrzahl von Abscheideöffnungen aufweist. Das Steuerelement ist von einer Außenseite der Abscheideeinrichtung durch zumindest eine der Abscheideöffnungen in den Durchlassbereich und/oder in die axiale Projektion des Durchlassbereichs hineinbewegbar.

Unter einer axialen Projektion des Durchlassbereichs wird vorliegend ein Bereich verstanden, der sich in einer Flussrichtung des Ernteguts an den Durchlassbereich anschließt.

Unter einem betriebsbereiten Zustand der Vorrichtung wird vorliegend ein Zustand verstanden, in dem die Vorrichtung beispielsweise in einem Mähdrescher montiert ist.

Unter dem "Hineinbewegen" wird vorliegend ein beliebiger Bewegungsablauf verstanden. Dieser Bewegungsablauf kann insbesondere die radiale Position des Steuerelements verändern. Insbesondere kann es sich allgemein um ein radiales Einbringen des Steuerelements handeln. Das Hineinbewegen kann beispielsweise eine translatorische Bewegung sein, beispielsweise ein Einschieben bzw. Verschieben. Das Hineinbewegen kann auch eine rotatorische Bewegung sein, beispielsweise ein Eingreifen, ein Verschwenken und/oder eine Drehbewegung sein. Das Verschwenken kann um eine exzentrische Achse des Steuerelements erfolgen. Eine Drehbewegung kann um eine zentrale Achse oder eine Symmetrieachse des Steuerelements erfolgen. Auch eine überlagerte translatorische und rotatorische Bewegung ist möglich. Das zumindest eine Steuerelement kann also insbesondere in den Durchlassbereich und/oder in eine entlang der Längsachse gebildete axiale Projektion des Durchlassbereichs schiebbar, schwenkbar und/oder drehbar sein.

Durch das Einbringen oder Hineinbewegen des Steuerelements wird der Durchlassbereich und/oder die axiale Projektion des Durchlassbereichs über eine axiale Länge des Steuerelements in radialer Richtung verengt. Dagegen wird der generelle radiale Abstand zwischen der Abscheideeinrichtung und dem Rotor (bzw. einer axialen Projektion des Rotors) unverändert beibehalten. Somit kann das Erntegut mit Hilfe des zumindest einen Steuerelements beim Durchlaufen der Vorrichtung gebremst werden. Infolgedessen wird die Gesamtmasse des in der Vorrichtung befindlichen Ernteguts erhöht. Dies wiederum führt zu geringeren Kornverlusten, insbesondere bei Erntegütern mit hohem Kornanteil und geringen anderen Pflanzenbestandteilen. Darüber hinaus können die Leistungseinbußen der Vorrichtung aufgrund des unveränderten, generellen Abstands zwischen der Abscheideeinrichtung und dem Rotor minimiert werden.

Die Abscheideöffnungen des Korbelements ermöglichen das Abscheiden bzw. Abführen der ausgeriebenen Körner. Dabei kann das Korbelement ein Dreschkorb sein, der im Bereich der Dreschvorrichtung angeordnet ist. Des Weiteren kann das Korbelement ein Trennkorb sein, der im Bereich der Abscheidevorrichtung angeordnet ist. Ferner kann sich ein Korbelement über die Dresch- und/oder Abscheidevorrichtung erstrecken. Alternativ kann der Abscheideeinrichtungsbereich auch eine Mehrzahl von Korbelementen aufweisen.

Das Steuerelement ist vorzugsweise kammartig ausgebildet und wird durch eine Mehrzahl von Abscheideöffnungen in den Durchlassbereich und/oder die axiale Projektion des Durchlassbereichs radial eingebracht. Somit können auch im Bereich des Steuerelements Abscheideöffnungen ausgebildet werden. Dies erhöht die effektive Abscheidefläche der Vorrichtung und führt somit zu einem reduzierten Kornverlust.

Die Aufgabe der Erfindung wird somit vollständig gelöst.

In einer bevorzugten Ausführungsform bedeckt der untere Umfangsbereich einen Winkelbereich von 180°, vorzugsweise 160°, der unterhalb der Längsachse angeordnet ist.

Durch das Einbringen bzw. Hineinbewegen des zumindest einen Steuerelements in den unterhalb der Längsachse angeordneten Bereich kann insbesondere Erntegut mit einem hohen Kornanteil einem effektiven Trennvorgang unterzogen werden. Auch in Betriebssituationen, in denen die Vorrichtung fast vollständig von Erntegut entleert ist, kann mittels des unterhalb des Rotors einbringbaren bzw. hineinbewegbaren Steuerelements eine gute Steuerung des Erntegutflusses erreicht werden, da das Erntegut in diesen Betriebssituationen vorzugsweise in einem Bereich unterhalb der Längsachse durch die Vorrichtung bewegt wird.

In einer Ausführungsform erstreckt sich die Abscheideeinrichtung über die gesamte axiale Länge des Rotors. In einer weiteren Ausführungsform erstreckt sich die Abscheideeinrichtung über die gesamte axiale Länge des Rotors und über einen weiteren axialen Bereich, der sich in einer Flussrichtung des Ernteguts an den Rotor anschließt.

Ferner ist die Vorrichtung bevorzugt als Dresch- und Abscheidevorrichtung ausgebildet. In der Dreschvorrichtung wird ein hoher Anteil der Körner, beispielsweise ca. 90 % der Körner, ausgerieben und von den übrigen Pflanzenbestandteilen getrennt. Von der Dreschvorrichtung gelangt das Erntegut zu der Abscheidevorrichtung, wo die restlichen Körner von den Restpflanzenbestandteilen getrennt werden. Die Abscheidevorrichtung kann in einer Ausführungsform einen sog. Hordenschüttler aufweisen, über den das Erntegut aufgrund einer Schüttelbewegung in Flussrichtung weiterbefördert wird. Durch die Schüttelbewegung des Hordenschüttlers können die restlichen Körner von dem Erntegut gewonnen werden. In einer weiteren Ausführungsform kann die Abscheidevorrichtung zumindest einen Rotor aufweisen, der das Erntegut durch eine Drehbewegung auflockert und somit zu einer zusätzlichen Abscheidung von Körnern führt. In diesen Ausführungsformen kann sich die Abscheideeinrichtung über die axiale Länge eines Rotors erstrecken, der der Dresch- und/oder Abscheidevorrichtung zugeordnet ist. Alternativ kann sich die Abscheideeinrichtung auch über die axiale Länge einer Mehrzahl von Rotoren erstrecken, die der Dresch- und/oder Abscheidevorrichtung zugeordnet sind.

In einer weiteren Ausführungsform ist das Steuerelement, gesehen in einer Flussrichtung des Ernteguts, in eine hintere Hälfte des Durchlassbereichs hineinbewegbar.

Durch diese Anordnung des Steuerelements kann eine optimale Füllung des Durchlassbereichs mit Erntegut erreicht werden. Mit Hilfe der Positionierung des Steuerelements in der hinteren Hälfte des Durchlassbereichs staut sich das Erntegut von dem hinteren Ende der Vorrichtung entgegen der Flussrichtung des Ernteguts in die Vorrichtung hinein. Damit ist die Vorrichtung mit einer ausreichenden Gesamtmasse von Erntegut befüllt, so dass ein effizientes Ausreiben der Körner erzielt wird.

In einer weiteren Ausführungsform ist das Steuerelement in einen Bereich hineinbewegbar, der sich unmittelbar in Verlängerung an den Durchflussbereich in Flussrichtung des Ernteguts anschließt. Mit anderen Worten ist das Steuerelement damit direkt hinter dem Rotor hineinbewegbar angeordnet.

In dieser Ausführungsform wird das Erntegut direkt hinter dem Rotor abgebremst. Für den Rückstau des Ernteguts kann somit die gesamte axiale Länge des Rotors genutzt werden. Die Kornverluste können weiter reduziert werden.

Gemäß einer weiteren Ausführungsform weist der Abscheideeinrichtungsbereich zumindest einen Durchgang auf, durch den das zumindest eine Steuerelement von einer Außenseite der Abscheideeinrichtung in den Durchlassbereich und/oder in die axiale Projektion des Durchlassbereichs hineinbewegbar ist.

Beispielsweise kann das Steuerelement in dieser Ausführungsform als plattenförmiges Element, z.B. als Blech, ausgebildet sein. Durch das Hineinbewegen, insbesondere radiale Einbringen, des Blechs in den Durchlassbereich und/oder in die axiale Projektion des Durchlassbereichs wird eine sehr effiziente Abbremsung des Ernteguts und damit eine gute Regulierung des Erntegutflusses ermöglicht.

In einer weiteren Ausführungsform weist das Steuerelement eine axiale Länge auf, die kleiner ist als eine axiale Länge des Rotors in Richtung der Längsachse.

Damit engt das Steuerelement den Durchlassbereich bzw. die axiale Projektion des Durchlassbereichs nur über einen kleinen axialen Bereich ein, der der axialen Länge des Steuerelements entspricht. Der generelle radiale Abstand zwischen der Abscheideeinrichtung und dem Rotor bleibt erhalten. Infolgedessen kann die Ernteleistung der Vorrichtung aufrechterhalten werden, während gleichzeitig die Abscheidequalität für die Körner erhöht wird.

In einer weiteren Ausführungsform ist eine durch das Steuerelement aufgespannte Ebene schräg, vorzugsweise senkrecht, zu einer Flussrichtung des Ernteguts angeordnet.

Mit anderen Worten ist das Steuerelement in einem von der Flussrichtung des Ernteguts abweichenden Winkel angeordnet. Dies wiederum führt zu einer guten Abbremsung des Ernteguts und einer wirksamen Beeinflussung des Erntegutflusses.

Gemäß einer weiteren Ausführungsform ist das Steuerelement zwischen einer ersten und einer zweiten Position radial versetzbar gelagert und ragt zumindest in der zweiten Position in den Durchlassbereich hinein.

In dieser Ausführungsform kann das Steuerelement in der ersten Position außerhalb des Durchlassbereichs angeordnet sein, um somit einen möglichst hohen Erntegutfluss zu ermöglichen. Alternativ kann das Steuerelement auch in der ersten Position innerhalb des Durchlassbereichs angeordnet sein, wobei das Steuerelement in der ersten Position weniger weit in den Durchlassbereich hineinragt als in der zweiten Position. Die erste und die zweite Position können auch Endpositionen für das Steuerelement bilden, wobei das Steuerelement stufenlos zwischen der ersten und der zweiten Position versetzbar ist.

In einer weiteren Ausführungsform weist die Vorrichtung ferner eine Stelleinheit auf, die dazu ausgebildet ist, das zumindest eine Steuerelement radial zu versetzen.

Mit Hilfe der Stelleinheit wird eine präzise Einstellung der radialen Position des Steuerelements ermöglicht. Die Stelleinheit kann auch dazu ausgebildet sein, eine Mehrzahl von Steuerelementen radial zu versetzen.

Gemäß einer weiteren Ausführungsform ist die Stelleinheit mechanisch, hydraulisch, pneumatisch und/oder elektrisch verstellbar.

Beispielsweise kann die Stelleinheit als Stellhebel ausgebildet sein, der das Steuerelement mit Hilfe eines mechanischen Mechanismus radial versetzt. Alternativ kann die Stelleinheit einen Aktuator aufweisen, der hydraulisch, pneumatisch und/oder elektrisch verstellbar ist und der in Abhängigkeit der Ansteuerung eine radiale Versetzung des Steuerelements bewirkt.

In einer weiteren Ausführungsform weist die Vorrichtung ferner eine Steuereinheit auf, die dazu ausgebildet ist, die Stelleinheit anzusteuern.

In dieser Ausführungsform ist die Steuereinheit beispielsweise elektrisch mit dem Aktuator gekoppelt. Die Steuereinheit kann den Aktuator ansteuern, so dass das Steuerelement beispielsweise zwischen der ersten und zweiten Position radial versetzt wird. Des Weiteren kann die Steuereinheit eine Eingabeeinheit aufweisen, in die von einem Betreiber der Vorrichtung Werte eingegeben werden, die die radiale Positionierung des Steuerelements beeinflussen.

Gemäß einer weiteren Ausführungsform weist die Vorrichtung ferner eine Erfassungseinheit auf, die dazu ausgebildet ist, zumindest einen Betriebsparameter der Vorrichtung zu erfassen, wobei die Steuereinheit dazu ausgebildet ist, das Steuerelement mittels der Stelleinheit in Abhängigkeit des Betriebsparameters radial zu versetzen.

Die Erfassungseinheit kann dazu ausgebildet sein, einen Betriebsparameter der Vorrichtung und/oder eines Mähdreschers zu erfassen, in dem die Vorrichtung installiert ist. Die Erfassungseinheit kann mit der Steuereinheit elektrisch gekoppelt sein und ist dazu ausgebildet, der Steuereinheit den erfassten Betriebsparameter zur Verfügung zu stellen. Die Steuereinheit kann dazu ausgebildet sein, den bereitgestellten Betriebsparameter auszuwerten und den Aktuator in Abhängigkeit des Betriebsparameters anzusteuern, so dass das Steuerelement radial in den Durchlassbereich und/oder die axiale Projektion des Durchlassbereichs eingebracht wird.

Besonders bevorzugt weist der Betriebsparameter einen Körnerverlust und/oder eine Auslastung einer Antriebsmaschine auf, die dazu ausgebildet ist, die Vorrichtung zu betreiben.

Die Antriebsmaschine kann beispielsweise ein Antriebsmotor eines Mähdreschers sein, in den die Vorrichtung integriert ist. Wenn die Motorauslastung des Mähdreschers gering ist (z.B. beim Wenden am Ende des Feldes), dann wird das Steuerelement weiter radial in den Durchlassbereich eingebracht, um die Geschwindigkeit des Erntegutflusses zu reduzieren und folglich die Gesamtmasse des in der Vorrichtung befindlichen Ernteguts zu erhöhen. Als Folge daraus ergibt sich ein verringerter Körnerverlust.

In einer weiteren Ausführungsform weist die Vorrichtung eine Mehrzahl von Steuerelementen auf, die in den Durchlassbereich und/oder in die axiale Projektion des Durchlassbereichs hineinbewegbar sind, und wobei die Steuerelemente in vordefinierten axialen Abständen zueinander entlang der Längsachse angeordnet sind.

In dieser Ausführungsform kann die Vorrichtung lediglich eine Stelleinheit aufweisen, die dazu ausgebildet ist, alle Steuerelemente radial zu versetzen. Dabei werden alle Steuerelemente vorzugsweise um den gleichen Betrag radial versetzt. Alternativ kann die Vorrichtung in dieser Ausführungsform eine Mehrzahl von Stelleinheiten aufweisen, wobei jeder der Stelleinheiten ein Steuerelement zugeordnet ist. Damit können die einzelnen Steuerelemente unterschiedlich weit in den Durchlassbereich und/oder in eine entlang der Längsachse gebildete axiale Projektion des Durchlassbereichs radial eingebracht werden. Die axialen Abstände zwischen den einzelnen Steuerelementen können den gleichen Wert oder unterschiedliche Werte aufweisen.

Gemäß einer weiteren Ausführungsform ist die Vorrichtung vom Axialflusstyp.

Bei dem Axialflusstyp wird das Erntegut axial zwischen dem Rotor und der Abscheideeinrichtung geführt. Außerdem wird der Vorrichtung das zu bearbeitende Erntegut in Richtung der Längsachse/Drehachse des Rotors zugeführt. Alternativ kann die Vorrichtung ein tangentiales Dreschwerk aufweisen. In dieser Ausführungsform ist das Dreschwerk quer zu einer Arbeitsrichtung des Mähdreschers in diesem angeordnet. Damit wird dem Dreschwerk das zu bearbeitende Erntegut in einem 90°-Winkel zur Längsachse/Drehachse der Dreschtrommel zugeführt.

Bei dem erfindungsgemäßen Verfahren ist es besonders bevorzugt, wenn das radiale Einbringen oder das Hineinbewegen des zumindest einen Steuerelements die Schritte aufweist: Erfassen zumindest eines Betriebsparameters der Vorrichtung und radiales Versetzen des zumindest einen Steuerelements in Abhängigkeit des Betriebsparameters.

In dieser Ausführungsform wird die radiale Position des Steuerelements in Abhängigkeit einer erfassten Betriebssituation bzw. eines erfassten Betriebsparameters präzise eingestellt. Demnach kann der Erntegutfluss optimal an die jeweilige Betriebssituation (z.B. Wenden des Mähdreschers am Ende des Felds, Erntegut mit hohem Kornanteil, Wetterbedingungen etc.) optimal angepasst werden. Dies resultiert in einem geringen Kornverlust.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ferner versteht sich, dass die Merkmale, Eigenschaften und Vorteile der erfindungsgemäßen Vorrichtung auch entsprechend auf das erfindungsgemäße Verfahren zutreffen bzw. anwendbar sind.

Ausführungsbeispiele der Erfindung sind in der Zeichnung dargestellt und werden in der nachfolgenden Beschreibung näher erläutert. Es zeigen:
- Fig. 1: eine schematische Darstellung eines Mähdreschers mit einer erfindungsgemäßen Vorrichtung zum Bearbeiten von Erntegut;
- Fig. 2: eine schematische axiale Schnittansicht einer Ausführungsform der erfindungsgemäßen Vorrichtung;
- Fig. 3: eine schematische radiale Schnittansicht der in Fig. 2 gezeigten Ausführungsform der erfindungsgemäßen Vorrichtung;
- Fig. 4: eine schematische perspektivische Darstellung einer weiteren Ausführungsform der erfindungsgemäßen Vorrichtung; und
- Fig. 5: eine schematische perspektivische Darstellung einer weiteren Ausführungsform der erfindungsgemäßen Vorrichtung.

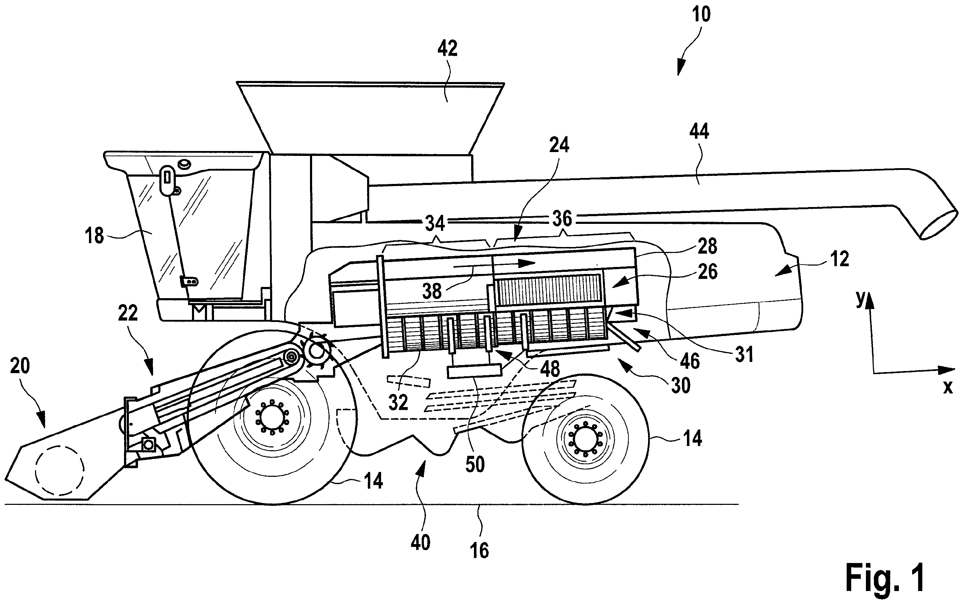

In Fig. 1 ist der Mähdrescher generell mit 10 bezeichnet.

Der Mähdrescher 10 weist eine tragende Struktur 12 und Räder 14 auf, die in Eingriff mit einem Untergrund 16 stehen. Des Weiteren weist der Mähdrescher 10 eine Fahrerkabine 18 auf, von der aus ein Fahrer den Mähdrescher 10 bedient. Ein Schneidwerk 20 des Mähdreschers 10 wird dazu verwendet, um Korn enthaltendes Erntegut zu ernten und das Erntegut einem Schrägförderer 22 zuzuführen. Mit Hilfe des Schrägförderers 22 wird das geerntete Gut einer Vorrichtung 24 zugeführt. In dem vorliegenden Ausführungsbeispiel bildet die Vorrichtung 24 eine Dresch- und Abscheidevorrichtung, die dazu dient, das Korn von den restlichen Pflanzenbestandteilen des Ernteguts zu trennen. Dabei weist die Vorrichtung 24 einen Rotor 26 und eine Abscheideeinrichtung 28 auf, die den Rotor 26 in einem radialen Abstand umgibt. Insbesondere weist die Abscheideeinrichtung 28 einen Abscheideeinrichtungsbereich 30 auf, der einen unteren Umfangsbereich 31 des Rotors 26 zumindest teilweise umgibt. In dem Abscheideeinrichtungsbereich 30 sind Korbelemente 32 angeordnet, die ein Abscheiden von ausgeriebenen Körnern ermöglichen.

An dem Rotor 26 sind verschiedene Bearbeitungselemente ausgebildet, so dass die Vorrichtung 24 zumindest einen Dreschabschnitt 34 und einen Abscheideabschnitt 36 aufweist. Beispielsweise kann der Rotor 26 in dem Dreschabschnitt eine Mehrzahl von Dreschzinken und in dem Abscheideabschnitt eine Mehrzahl von Trennfingern aufweisen. Durch die Dreschzinken wird das Korn aus dem Erntegut ausgerieben. Anschließend wird das gedroschene Erntegut mit Hilfe der Trennfinger aufgelockert und somit eine Abscheidung der restlichen Körner ermöglicht.

Darüber hinaus kann der Rotor 26 eine sog. Förderschnecke aufweisen, die an einem äußeren Umfang des Rotors 26 ausgebildet ist und die dazu dient, das Erntegut in einer Flussrichtung 38 durch die Vorrichtung 24 zu befördern.

Korn und Spreu, die durch die Korbelemente 32 fallen, werden einem Reinigungssystem 40 zugeführt. Das Reinigungssystem 40 weist beispielsweise ein Gebläse und eine Mehrzahl von Lamellensieben auf, die in eine Schwingbewegung versetzt werden können. Mit Hilfe des Reinigungssystems 40 wird die Spreu entfernt und das saubere Korn einem sog. Elevator (nicht gezeigt in Fig. 1) zugeführt. Der Elevator befördert das saubere Korn in einen Korntank 42. Über einen Entladeschneckenförderer 44 kann das Korn aus dem Korntank 42 anschließend auf einen Kornwagen oder Anhänger entladen werden.

Die restlichen Pflanzenbestandteile verlassen die Vorrichtung 24 durch einen Auslass 46 und werden an einer Rückseite des Mähdreschers 10 beispielsweise auf den Untergrund 16 ausgestoßen.

Zur Steuerung des Erntegutflusses durch die Vorrichtung 24 weist die Vorrichtung 24 ferner eine Mehrzahl von Steuerelementen 48 auf, die in einen in Fig. 1 nicht gezeigten Zwischenraum zwischen der Abscheideeinrichtung 28 und dem unteren Umfangsbereich 31 des Rotors 26 radial (siehe y-Richtung in Fig. 1) einbringbar bzw. hineinbewegbar sind, insbesondere hineinbewegbar sind. Es versteht sich, dass an dem Abscheideeinrichtungsbereich 30 auch nur ein einzelnes Steuerelement 48 angeordnet sein kann, ohne den Rahmen der Erfindung zu verlassen. Ferner weist die Vorrichtung 24 eine Stelleinheit 50 auf, die dazu ausgebildet ist, die Steuerelemente 48, gesehen von dem Rotor 26, radial zu versetzen. Dabei kann die Stelleinheit 50 mechanisch, hydraulisch, pneumatisch und/oder elektrisch verstellbar sein.

Durch das Einbringen oder Hineinbewegen der Steuerelemente 48 in den Zwischenraum zwischen der Abscheideeinrichtung 28 und dem unteren Umfangsbereich 31 des Rotors 26 kann das Erntegut beim Durchlaufen der Vorrichtung 24 gebremst werden. Damit verbleibt das Erntegut über einen längeren Zeitraum in der Vorrichtung 24. Infolgedessen können die Körner aus dem Erntegut effektiver ausgerieben und abgeschieden werden. Insbesondere bei Erntegütern mit einem hohen Kornanteil und geringen sonstigen Pflanzenbestandteilen können die Kornverluste mit dieser Maßnahme erheblich reduziert werden.

In den folgenden Figuren sind weitere Ausführungsformen der erfindungsgemäßen Vorrichtung 24 gezeigt. Diese Ausführungsformen entsprechen hinsichtlich Aufbau und Funktionsweise generell der Vorrichtung 24 aus Fig. 1. Gleiche Elemente sind daher durch gleiche Bezugszeichen gekennzeichnet. Im Folgenden werden im Wesentlichen die Unterschiede erläutert.

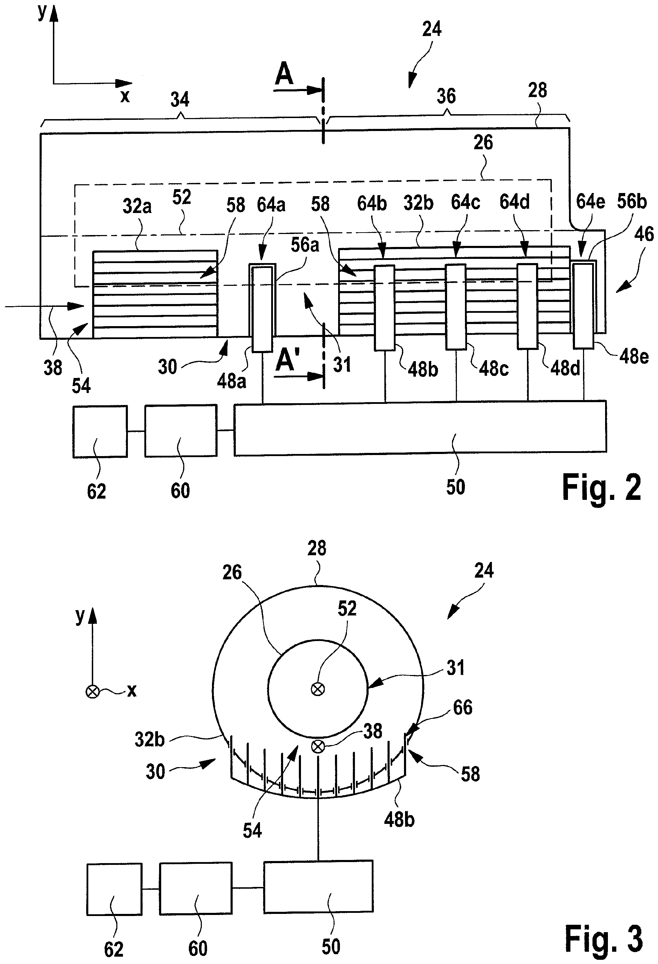

Fig. 2 zeigt eine schematische axiale Schnittansicht (d.h. einen Schnitt entlang der x-Achse) einer Ausführungsform der erfindungsgemäßen Vorrichtung 24. Der Rotor 26 weist eine Längsachse 52 auf und ist drehbar um die Längsachse 52 gelagert. Der Abscheideeinrichtungsbereich 30 umgibt den in einem betriebsbereiten Zustand der Vorrichtung 24 unterhalb der Längsachse 52 angeordneten unteren Umfangsbereich 31 des Rotors 26. Als betriebsbereiter Zustand wird vorliegend ein Zustand definiert, in dem die Vorrichtung 24 in den Mähdrescher 10 eingebaut ist. Der Abscheideeinrichtungsbereich 30 weist in dem Dreschabschnitt 30 das Korbelement 32a auf, das auch als Dreschkorbelement bezeichnet werden kann. Des Weiteren weist der Abscheideeinrichtungsbereich 30 in dem Abscheideabschnitt 36 das Korbelement 32b auf, das als Trennkorbelement bezeichnet werden kann. Zwischen dem Abscheideeinrichtungsbereich 30 und dem unteren Umfangsbereich 31 des Rotors 26 ist ein Durchlassbereich 54 für das Erntegut ausgebildet.

Ferner weist die Vorrichtung 24 in dieser Ausführungsform eine Mehrzahl von Steuerelementen 48a bis 48e auf. Es versteht sich, dass die Vorrichtung 24 auch eine beliebige andere Anzahl von Steuerelementen 48 aufweisen kann. Ferner können die Steuerelemente 48 auch mit anderen axialen Abständen zueinander angeordnet sein. Vorliegend ist das Steuerelement 48a an dem Abscheideeinrichtungsbereich 30 innerhalb des Dreschabschnitts 34 angeordnet. Dabei weist der Abscheideeinrichtungsbereich 30 einen Durchgang 56a auf, durch den das Steuerelement 48a von einer Außenseite der Abscheideeinrichtung 28 in den Durchlassbereich 54 hineinbewegbar ist. Beispielsweise kann das Steuerelement 48a als Metallplatte ausgebildet sein, die mittels der Stelleinheit 50 in den Durchlassbereich 54 eingebracht werden kann.

Die Steuerelemente 48b, 48c, 48d sind innerhalb des Abscheideabschnitts 36 an dem Abscheideeinrichtungsbereich 30 angeordnet und sind in diesem Ausführungsbeispiel kammartig ausgebildet. Damit können die Steuerelemente 48b bis 48d durch Abscheideöffnungen 58 des Korbelements 32b in den Durchlassbereich 54 radial eingebracht werden.

Der Abscheideeinrichtungsbereich 30 weist einen weiteren Durchgang 56b auf, der in Flussrichtung 38 gesehen hinter dem Rotor 26 angeordnet ist. Durch den Durchgang 56b ist das Steuerelement 48e in eine entlang der Längsachse 52 gebildete axiale Projektion des Durchlassbereichs 54 hineinbewegbar.

Die Stelleinheit 50 ist in der vorliegenden Ausführungsform dazu ausgebildet, alle Steuerelemente 48a bis 48e synchron zu versetzen. Mit anderen Worten werden die Steuerelemente 48a bis 48e um den gleichen Betrag radial versetzt. In einer alternativen Ausführungsform kann die Stelleinheit 50 auch dazu ausgebildet sein, die Steuerelemente 48a bis 48e unabhängig voneinander radial zu versetzen. Insbesondere kann die Stelleinheit 50 in dieser Ausführungsform auch einzelne Stellelemente aufweisen, die jeweils einem Steuerelement 48a bis 48e zugeordnet sind.

Die Stelleinheit 50 wird vorliegend durch eine Steuereinheit 60 angesteuert. Beispielsweise kann die Stelleinheit 50 einen Elektromotor aufweisen, der durch die Steuereinheit 60 elektrisch angesteuert wird. In Abhängigkeit eines Steuersignals von der Steuereinheit 60 wirkt der Elektromotor auf die Steuerelemente 48a bis 48e und versetzt diese radial in den Durchlassbereich 54 und/oder in die axiale Projektion des Durchlassbereichs 54.

Darüber hinaus weist die Vorrichtung 24 eine Erfassungseinheit 62 auf, die dazu ausgebildet ist, zumindest einen Betriebsparameter der Vorrichtung 24 und/oder des Mähdreschers 10 zu erfassen. Beispielsweise kann die Erfassungseinheit 62 Körperschallmikrofone aufweisen, die dazu ausgebildet sind, einen Kornverlust zu erfassen. Des Weiteren kann die Erfassungseinheit 62 mit einem Steuergerät des Mähdreschers 10 gekoppelt sein, um eine Motorauslastung des Mähdreschers 10 zu erfassen. Die erfassten Betriebsparameter werden der Steuereinheit 60 zur Verfügung gestellt, die in Abhängigkeit der Betriebsparameter die Stelleinheit 50 ansteuert, um die Steuerelemente 48a bis 48e radial zu versetzen.

Wird im Betrieb der Vorrichtung 24 beispielsweise ein hoher Kornverlust durch die Erfassungseinheit 62 erfasst, dann versetzt die Steuereinheit 60 die Steuerelemente 48a bis 48e mittels der Stelleinheit 50 weiter in den Durchlassbereich 54 und/oder in die axiale Projektion des Durchlassbereichs 54. Damit verengen die Steuerelemente 48a bis 48e den Durchlassbereich 54 bzw. die axiale Projektion des Durchlassbereichs 54 an mehreren Verengungsstellen 64. Die Verengungsstellen 64 weisen jeweils eine Länge auf, die einer axialen Länge der jeweiligen Steuerelemente 48a bis 48e entspricht. Infolgedessen wird der Durchlassbereich 54 bzw. die axiale Projektion des Durchlassbereichs 54 nur an den vorgegebenen Verengungsstellen 64 eingeengt. Der generelle radiale Abstand zwischen der Abscheideeinrichtung 28 und dem Rotor 26 wird jedoch beibehalten. Dies ermöglicht zum einen, dass die Kornverluste verringert werden können, da das Erntegut mit Hilfe der Steuerelemente 48a bis 48e abgebremst wird und somit länger in der Vorrichtung 24 verweilt. Auf der anderen Seite kann durch die Beibehaltung des generellen radialen Abstands zwischen der Abscheideeinrichtung 28 und dem Rotor 26 eine hohe Ernteleistung der Vorrichtung 24 bzw. des Mähdreschers 10 bereitgestellt werden.

Des Weiteren kann die Erfassungseinheit 62 beispielsweise eine verringerte Motorauslastung des Mähdreschers 10 erfassen. In dieser Betriebssituation wird der Mähdrescher 10 z.B. am Feldende umgedreht. Aufgrund des Umdrehvorgangs des Mähdreschers 10 befindet sich relativ wenig Erntegut innerhalb der Vorrichtung 24. Daher reicht die in der Vorrichtung 24 vorhandene Gesamtmasse des Ernteguts nicht aus, um die Körner effektiv auszureiben. Erfindungsgemäß werden daher die Steuerelemente 48a bis 48e weiter in den Durchlassbereich 54 bzw. in die axiale Projektion des Durchlassbereichs 54 eingebracht, um die Gesamtmasse des in der Vorrichtung 24 befindlichen Ernteguts zu erhöhen. Die Kornverluste können durch diese Maßnahme verringert werden.

Wird mittels der Erfassungseinheit 62 wieder eine hohe Motorauslastung des Mähdreschers 10 erfasst, so werden die Steuerelemente 48a bis 48e derart radial versetzt, dass die Steuerelemente 48a bis 48e weniger weit in den Durchlassbereich 54 und/oder in die axiale Projektion des Durchlassbereichs 54 hineinragen. Darüber hinaus können die Steuerelemente 48a bis 48e auch vollständig aus dem Durchlassbereich 54 und/oder der axialen Projektion des Durchlassbereichs 54 herausgezogen werden.

Fig. 3 zeigt eine schematische radiale Schnittansicht der in Fig. 2 gezeigten Ausführungsform der erfindungsgemäßen Vorrichtung 24 entlang der Schnittlinie A-A' (d.h. einen Schnitt entlang der y-Achse).

Dieser Ansicht ist zu entnehmen, dass das Steuerelement 48b kammartig ausgebildet ist, wobei einzelne Zinken 66 des Steuerelements 48b durch eine Mehrzahl von Abscheideöffnungen 58 des Korbelements 32b in den Durchlassbereich 54 hineinragen. In dem in Fig. 3 illustrierten Ausführungsbeispiel ist eine durch die Zinken 66 gebildete Ebene senkrecht zu der Flussrichtung 38 des Ernteguts angeordnet. Es versteht sich jedoch, dass die durch die Zinken 66 gebildete Ebene auch in einem beliebigen anderen Winkel schräg zu der Flussrichtung 38 angeordnet sein kann. Darüber hinaus kann auch die Flussrichtung 38 abhängig von einer Oberflächengestaltung des Rotors 26 beispielsweise wendelförmig um die Längsachse 52 verlaufen. Auch in dieser Ausführungsform werden die Steuerelemente 48 derart angeordnet, dass die durch die Steuerelemente 48 aufgespannten Ebenen schräg, vorzugsweise senkrecht, zu der Flussrichtung 38 angeordnet sind.

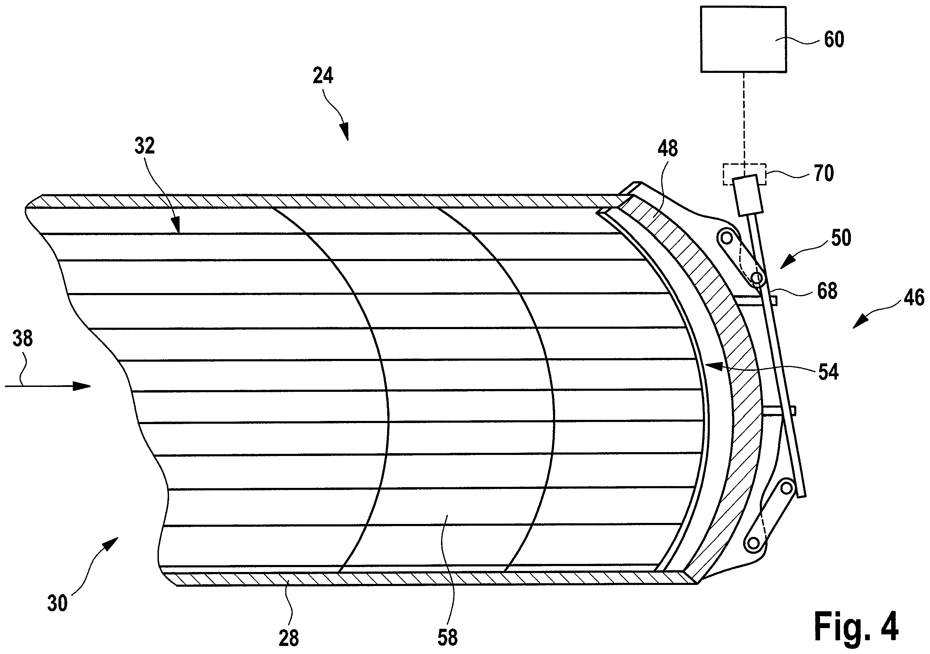

Fig. 4 zeigt eine schematische perspektivische Darstellung einer weiteren Ausführungsform der erfindungsgemäßen Vorrichtung 24. Insbesondere zeigt die Fig. 4 die Vorrichtung 24 aus einem Betrachtungswinkel unterhalb der Vorrichtung 24.

In dieser Ausführungsform weist die Vorrichtung 24 lediglich ein Steuerelement 48 auf, das direkt hinter dem Rotor bzw. Korbelement 32, gesehen in der Flussrichtung 38, in die axiale Projektion des Durchlassbereichs 54 hineinbewegbar ist. Die Stelleinheit 50 weist in dieser Ausführungsform einen mechanischen Verstellmechanismus 68 auf, der in Fig. 4 in schematischer Form dargestellt ist. Beispielsweise kann der mechanische Verstellmechanismus 68 durch den Fahrer des Mähdreschers 10 betätigt werden. So kann das Steuerelement 48 z.B. durch Verdrehen des mechanischen Verstellmechanismus 68 weiter in die axiale Projektion des Durchlassbereichs 54 eingebracht werden, um den Erntegutfluss stärker abzubremsen. Durch entsprechendes Betätigen des mechanischen Verstellmechanismus 68 kann das Steuerelement 48 auch wieder aus der axialen Projektion des Durchlassbereichs 54 herausbewegt werden, um den Erntegutfluss zu erhöhen.

Optional kann die Stelleinheit 50 auch einen hydraulischen, pneumatischen oder elektrischen Aktuator 70 aufweisen, der über die Steuereinheit 60 angesteuert wird, um das Steuerelement 48 radial zu versetzen.

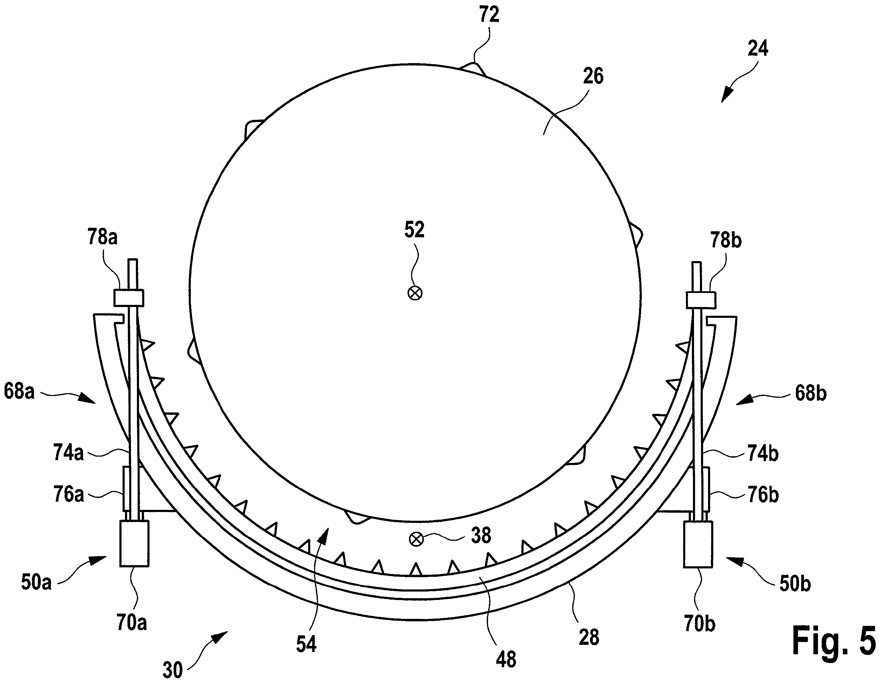

Fig. 5 zeigt eine schematische perspektivische Darstellung einer weiteren Ausführungsform der erfindungsgemäßen Vorrichtung 24. Insbesondere zeigt die Fig. 5 die Vorrichtung 24 aus einem Betrachtungswinkel in Richtung der Längsachse 52.

In dieser Ausführungsform ist näher gezeigt, dass der Rotor 26 an seinem Außenumfang mit sog. Schlagleisten 72 besetzt ist. Mit Hilfe der Schlagleisten 72 kann das Erntegut sehr effizient ausgerieben werden, wenn der Rotor 26 in eine Drehbewegung versetzt wird.

Außerdem ist in der Fig. 5 gezeigt, dass die Vorrichtung 24 zwei Verstellmechanismen 68a, 68b aufweist, die dazu ausgebildet sind, das Steuerelement 48 radial in den Durchlassbereich 54 einzubringen bzw. das Steuerelement 48 innerhalb des Durchlassbereichs 54 radial zu versetzen. Dabei sind den Verstellmechanismen 68a, 68b die Aktuatoren 70a, 70b zugeordnet, die als Stellmotoren ausgebildet sind.

Jeder der Verstellmechanismen 68a, 68b kann eine Verstellspindel 74 aufweisen, die mit dem Aktuator 70 verbunden ist, und die durch den Aktuator 70 in eine Drehbewegung versetzt werden kann. Dabei wird die Verstellspindel 74 durch eine erste Halterung 76 und eine zweite Halterung 78, die als Gewindehalterung ausgebildet ist, geführt.

Sofern die Verstellspindel 74 mit Hilfe des zugeordneten Aktuators 70 in eine Drehbewegung versetzt wird, wird das Steuerelement 48 aufgrund der Lagerung der Verstellspindel 74 in der Gewindehalterung 78 radial innerhalb des Durchlassbereichs 54 versetzt.

Vorzugsweise werden die beiden Aktuatoren 70a, 70b so angesteuert, dass das Steuerelement 48 in Bezug auf die beiden Halterungen 78a, 78b gleichförmig bewegt wird. Allerdings besteht ebenso die Möglichkeit, die beiden Aktuatoren 70a, 70b unterschiedlich anzusteuern, um ein unterschiedliches Anheben bzw. Absenken des Steuerelements 48 in Bezug auf die zweiten Halterungen 78a, 78b zu erreichen.

Obgleich somit bevorzugte Ausführungsformen der erfindungsgemäßen Vorrichtung 24 und des erfindungsgemäßen Verfahrens gezeigt worden sind, versteht sich, dass verschiedene Abwandlungen und Modifikationen vorgenommen werden können, ohne den Rahmen der Erfindung zu verlassen.

Beispielsweise können die Steuerelemente 48 auch in einem sog. Tangentialdreschwerk eingesetzt werden. Ferner können beliebige Verstellmechanismen zum Versetzen der Steuerelemente 48 eingesetzt werden.

## Patentansprüche

1. Vorrichtung (24) zum Bearbeiten von Erntegut, insbesondere Dresch- und/oder Abscheidevorrichtung, mit:
- einem Rotor (26), der drehbar um seine Längsachse (52) gelagert ist,
- einer Abscheideeinrichtung (28) mit einem Abscheideeinrichtungsbereich (30), der einen in einem betriebsbereiten Zustand der Vorrichtung (24) unterhalb der Längsachse (52) angeordneten unteren Umfangsbereich (31) des Rotors (26) zumindest teilweise umgibt und radial beabstandet zu dem Rotor (26) angeordnet ist, wobei zwischen dem Abscheideeinrichtungsbereich (30) und dem unteren Umfangsbereich (31) des Rotors (26) ein Durchlassbereich (54) für das Erntegut ausgebildet ist, wobei sich der Abscheideeinrichtungsbereich (30) zumindest in einem Teilbereich des Rotors (26) entlang der Längsachse (52) erstreckt, und
- zumindest einem Steuerelement (48), das an dem Abscheideeinrichtungsbereich (30) angeordnet ist, wobei das zumindest eine Steuerelement (48) in den Durchlassbereich (54) und/oder in eine entlang der Längsachse (52) gebildete axiale Projektion des Durchlassbereichs (54) hineinbewegbar ist, um einen Erntegutfluss zu steuern,
wobei der Abscheideeinrichtungsbereich (30) zumindest ein Korbelement (32) aufweist, das eine Mehrzahl von Abscheideöffnungen (58) aufweist, wobei das Steuerelement (48) von einer Außenseite der Abscheideeinrichtung (28) durch zumindest eine der Abscheideöffnungen (58) in den Durchlassbereich (54) und/oder in die axiale Projektion des Durchlassbereichs (54) hineinbewegbar ist.

2. Vorrichtung nach Anspruch 1, wobei das Steuerelement (48), gesehen in einer Flussrichtung (38) des Ernteguts, in eine hintere Hälfte des Durchlassbereichs (54) hineinbewegbar ist.

3. Vorrichtung nach Anspruch 1 oder 2, wobei der Abscheideeinrichtungsbereich (30) zumindest einen Durchgang (56) aufweist, durch den das zumindest eine Steuerelement (48) von einer Außenseite der Abscheideeinrichtung (28) in den Durchlassbereich (54) und/oder in die axiale Projektion des Durchlassbereichs (54) hineinbewegbar ist.

4. Vorrichtung nach einem der Ansprüche 1 bis 3, wobei das Steuerelement (48) eine axiale Länge aufweist, die kleiner ist als eine axiale Länge des Rotors (26) in Richtung der Längsachse (52).

5. Vorrichtung nach einem der Ansprüche 1 bis 4, wobei eine durch das Steuerelement (48) aufgespannte Ebene schräg, vorzugsweise senkrecht, zu einer Flussrichtung (38) des Ernteguts angeordnet ist.

6. Vorrichtung nach einem der Ansprüche 1 bis 5, wobei das Steuerelement (48) zwischen einer ersten und einer zweiten Position radial versetzbar gelagert ist und zumindest in der zweiten Position in den Durchlassbereich (54) hineinragt.

7. Vorrichtung nach einem der Ansprüche 1 bis 6, wobei die Vorrichtung ferner eine Stelleinheit (50) aufweist, die dazu ausgebildet ist, das zumindest eine Steuerelement (48) radial zu versetzen.

8. Vorrichtung nach Anspruch 7, wobei die Vorrichtung ferner eine Steuereinheit (60) aufweist, die dazu ausgebildet ist, die Stelleinheit (50) anzusteuern.

9. Vorrichtung nach Anspruch 8, wobei die Vorrichtung ferner eine Erfassungseinheit (62) aufweist, die dazu ausgebildet ist, zumindest einen Betriebsparameter der Vorrichtung (24) zu erfassen, wobei die Steuereinheit (60) dazu ausgebildet ist, das Steuerelement (48) mittels der Stelleinheit (50) in Abhängigkeit des Betriebsparameters radial zu versetzen.

10. Vorrichtung nach Anspruch 9, wobei der Betriebsparameter einen Körnerverlust und/oder eine Auslastung einer Antriebsmaschine aufweist, die dazu ausgebildet ist, die Vorrichtung (24) zu betreiben.

11. Vorrichtung nach einem der Ansprüche 1 bis 10, wobei die Vorrichtung (24) eine Mehrzahl von Steuerelementen (48) aufweist, die in den Durchlassbereich (54) und/oder in die axiale Projektion des Durchlassbereichs (54) hineinbewegbar sind, und wobei die Steuerelemente (48) in vordefinierten axialen Abständen zueinander entlang der Längsachse (52) angeordnet sind.

12. Vorrichtung nach einem der Ansprüche 1 bis 11, wobei die Vorrichtung (24) vom Axialflusstyp ist.

13. Mähdrescher (10) mit einer Vorrichtung (24) nach einem der Ansprüche 1 bis 12.

14. Verfahren zum Steuern eines Erntegutflusses in einer Vorrichtung (24) zum Bearbeiten von Erntegut, insbesondere einer Dresch- und/oder Abscheidevorrichtung, wobei die Vorrichtung (24) einen Rotor (26), der drehbar um seine Längsachse (52) gelagert ist, eine Abscheideeinrichtung (28) mit einem Abscheideeinrichtungsbereich (30), der einen in einem betriebsbereiten Zustand der Vorrichtung (24) unterhalb der Längsachse (52) angeordneten unteren Umfangsbereich (31) des Rotors (26) zumindest teilweise umgibt und radial beabstanded zu dem Rotor (26) angeordnet ist, wobei zwischen dem Abscheideeinrichtungsbereich (30) und dem unteren Umfangsbereich (31) des Rotors (26) ein Durchlassbereich (54) für das Erntegut ausgebildet ist, wobei sich der Abscheideeinrichtungsbereich (30) zumindest in einem Teilbereich des Rotors (26) entlang der Längsachse (52) erstreckt, und zumindest ein Steuerelement (48) aufweist, das an dem Abscheideeinrichtungsbereich (30) angeordnet ist, wobei der Abscheideeinrichtungsbereich (30) zumindest ein Korbelement (32) aufweist, das eine Mehrzahl von Abscheideöffnungen (58) aufweist, wobei das Steuerelement (48) von einer Außenseite der Abscheideeinrichtung (28) durch zumindest eine der Abscheideöffnungen (58) in den Durchlassbereich (54) und/oder in die axiale Projektion des Durchlassbereichs (54) hineinbewegbar ist, wobei das Verfahren aufweist:
- Hineinbewegen des zumindest einen Steuerelements (48) in den Durchlassbereich (54) und/oder in eine entlang der Längsachse (52) gebildete axiale Projektion des Durchlassbereichs (54), um den Erntegutfluss zu steuern.

15. Verfahren nach Anspruch 14, wobei das Hineinbewegen des zumindest einen Steuerelements (48) die Schritte aufweist:
- Erfassen zumindest eines Betriebsparameters der Vorrichtung (24), und
- radiales Versetzen des zumindest einen Steuerelements (48) in Abhängigkeit des Betriebsparameters.

## Claims

1. An apparatus (24) for processing harvested crops, in particular threshing and/or separating apparatus, comprising:
- a rotor (26) which is mounted rotatably about its longitudinal axis (52),
- a separating device (28) with a separating device region (30) which at least partially surrounds a lower circumferential region (31) of the rotor (26), said circumferential region being arranged below the longitudinal axis (52) in an operationally ready state of the apparatus (24), and is arranged radially spaced apart from the rotor (26), wherein a passage region (54) for the harvested crop is formed between the separating device region (30) and the lower circumferential region (31) of the rotor (26), wherein the separating device region (30) extends along the longitudinal axis (52), at least in a partial region of the rotor (26), and
- at least one control element (48) which is arranged on the separating device region (30), wherein the at least one control element (48) is movable into the passage region (54) and/or into an axial projection of the passage region (54), said axial projection being formed along the longitudinal axis (52), in order to control the flow of harvested crop,
wherein the separating device region (30) has at least one basket element (32) which has a plurality of separating openings (58), wherein the control element (48) is movable from an outer side of the separating device (28) through at least one of the separating openings (58) into the passage region (54) and/or into the axial projection of the passage region (54).

2. The apparatus as claimed in claim 1, wherein the control element (48) is movable, as seen in a flow direction (38) of the harvested crop, into a rear half of the passage region (54).

3. The apparatus as claimed in claim 1 or 2, wherein the separating device region (30) has at least one passage (56) through which the at least one control element (48) is movable from an outer side of the separating device (28) into the passage region (54) and/or into the axial projection of the passage region (54).

4. The apparatus as claimed in one of claims 1 to 3, wherein the control element (48) has an axial length which is smaller than an axial length of the rotor (26) in the direction of the longitudinal axis (52).

5. The apparatus as claimed in one of claims 1 to 4, wherein a plane spanned by the control element (48) is arranged obliquely, preferably perpendicularly, to a flow direction (38) of the harvested crop.

6. The apparatus as claimed in one of claims 1 to 5, wherein the control element (48) is mounted in a manner movable radially between a first and a second position and, at least in the second position, projects into the passage region (54).

7. The apparatus as claimed in one of claims 1 to 6, wherein the apparatus furthermore has an adjusting unit (50) which is designed to move the at least one control element (48) radially.

8. The apparatus as claimed in claim 7, wherein the apparatus furthermore has a control unit (60) which is designed to control the adjusting unit (50).

9. The apparatus as claimed in claim 8, wherein the apparatus furthermore has a sensing unit (62) which is designed to sense at least one operating parameter of the apparatus (24), wherein the control unit (60) is designed to move the control element (48) radially by means of the adjusting unit (50) depending on the operating parameter.

10. The apparatus as claimed in claim 9, wherein the operating parameter comprises a grain loss and/or a load of a drive machine which is designed to operate the apparatus (24).

11. The apparatus as claimed in one of claims 1 to 10, wherein the apparatus (24) has a plurality of control elements (48) which are movable into the passage region (54) and/or into the axial projection of the passage region (54), and wherein the control elements (48) are arranged at predefined axial distances from one another along the longitudinal axis (52).

12. The apparatus as claimed in one of claims 1 to 11, wherein the apparatus (24) is of the axial flow type.

13. A combine harvester (10) with an apparatus (24) as claimed in one of claims 1 to 15.

14. A method for controlling the flow of a harvested crop in an apparatus (24) for processing harvested crops, in particular a threshing and/or separating apparatus, wherein the apparatus (24) a rotor (26) which is mounted rotatably about its longitudinal axis (52), a separating device (28) with a separating device region (30) which at least partially surrounds a lower circumferential region (31) of the rotor (26), said circumferential region being arranged below the longitudinal axis (52) in an operationally ready state of the apparatus (24), and is arranged radially spaced apart from the rotor (26), wherein a passage region (54) for the harvested crop is formed between the separating device region (30) and the lower circumferential region (31) of the rotor (26), wherein the separating device region (30) extends along the longitudinal axis (52), at least in a partial region of the rotor (26), and has at least one control element (48) which is arranged on the separating device region (30), wherein the separating device region (30) has at least one basket element (32) which has a plurality of separating openings (58), wherein the control element (48) is movable from an outer side of the separating device (28) through at least one of the separating openings (58) into the passage region (54) and/or into the axial projection of the passage region (54), wherein the method comprises:
- moving the at least one control element (48) into the passage region (54) and/or into an axial projection of the passage region (54), said axial projection being formed along the longitudinal axis (52), in order to control the flow of harvested crop.

15. The method as claimed in claim 14, wherein the moving in of the at least one control element (48) comprises the following steps:
- sensing at least one operating parameter of the apparatus (24), and
- radially moving the at least one control element (48) depending on the operating parameter.

## Revendications

1. Dispositif (24) pour traiter un produit récolté, en particulier dispositif de battage et/ou de séparation, comprenant :
- un rotor (26) qui est supporté à rotation autour de son axe longitudinal (52),
- un dispositif de séparation (28) avec une région (30) du dispositif de séparation qui entoure au moins en partie une région périphérique inférieure (31) du rotor (26) située sous l'axe longitudinal (52) dans un état prêt au fonctionnement du dispositif (24), et qui est disposée à distance radiale du rotor (26), une région de passage (54) pour le produit récolté étant réalisée entre la région (30) du dispositif de séparation et la région périphérique inférieure (31) du rotor (26), la région (30) du dispositif de séparation s'étendant au moins dans une région partielle du rotor (26) le long de l'axe longitudinal (52), et
- au moins un élément de commande (48) qui est disposé au niveau de la région (30) du dispositif de séparation, l'au moins un élément de commande (48) pouvant être déplacé vers l'intérieur dans la région de passage (54) et/ou dans une projection axiale de la région de passage (54) formée le long de l'axe longitudinal (52), afin de commander un flux de produit récolté,
la région (30) du dispositif de séparation présentant au moins un élément de panier (32) qui présente une pluralité d'ouvertures de séparation (58), l'élément de commande (48) pouvant être déplacé vers l'intérieur depuis un côté extérieur du dispositif de séparation (28) à travers au moins l'une des ouvertures de séparation (58) dans la région de passage (54) et/ou dans la projection axiale de la région de passage (54).

2. Dispositif selon la revendication 1, dans lequel l'élément de commande (48), vu dans une direction de flux (38) du produit récolté, peut être déplacé vers l'intérieur dans une moitié arrière de la région de passage (54).

3. Dispositif selon la revendication 1 ou 2, dans lequel la région (30) du dispositif de séparation présente au moins un passage (56) à travers lequel l'au moins un élément de commande (48) peut être déplacé vers l'intérieur depuis un côté extérieur du dispositif de séparation (28) dans la région de passage (54) et/ou dans la projection axiale de la région de passage (54).

4. Dispositif selon l'une quelconque des revendications 1 à 3, dans lequel l'élément de commande (48) présente une longueur axiale qui est inférieure à une longueur axiale du rotor (26) dans la direction de l'axe longitudinal (52).

5. Dispositif selon l'une quelconque des revendications 1 à 4, dans lequel un plan tendu par l'élément de commande (48) est disposé obliquement, de préférence perpendiculairement, à une direction de flux (38) du produit récolté.

6. Dispositif selon l'une quelconque des revendications 1 à 5, dans lequel l'élément de commande (48) est supporté de manière déplaçable radialement entre une première et une deuxième position et, au moins dans la deuxième position, pénètre dans la région de passage (54).

7. Dispositif selon l'une quelconque des revendications 1 à 6, le dispositif présentant en outre une unité de réglage (50) qui est réalisée pour déplacer radialement l'au moins un élément de commande (48).

8. Dispositif selon la revendication 7, le dispositif présentant en outre une unité de commande (60) qui est réalisée pour piloter l'unité de réglage (50).

9. Dispositif selon la revendication 8, le dispositif présentant en outre une unité de détection (62) qui est réalisée pour détecter au moins un paramètre de fonctionnement du dispositif (24), l'unité de commande (60) étant réalisée pour déplacer radialement l'élément de commande (48) au moyen de l'unité de réglage (50) en fonction du paramètre de fonctionnement.

10. Dispositif selon la revendication 9, dans lequel le paramètre de fonctionnement présente une perte de grains et/ou un degré d'utilisation d'une machine d'entraînement qui est réalisée pour entraîner le dispositif (24).

11. Dispositif selon l'une quelconque des revendications 1 à 10, le dispositif (24) présentant une pluralité d'éléments de commande (48) qui peuvent être déplacés vers l'intérieur dans la région de passage (54) et/ou dans la projection axiale de la région de passage (54), et dans lequel les éléments de commande (48) sont disposés à intervalles axiaux prédéfinis les uns par rapport aux autres le long de l'axe longitudinal (52).

12. Dispositif selon l'une quelconque des revendications 1 à 11, le dispositif (24) étant du type à flux axial.

13. Moissonneuse-batteuse (10) comprenant un dispositif (24) selon l'une quelconque des revendications 1 à 12.

14. Procédé pour commander un flux de produit récolté dans un dispositif (24) pour le traitement de produit récolté, en particulier un dispositif de battage et/ou de séparation, le dispositif (24) présentant un rotor (26) qui est supporté à rotation autour de son axe longitudinal (52), un dispositif de séparation (28) avec une région (30) du dispositif de séparation qui entoure au moins en partie une région périphérique inférieure (31) du rotor (26) située sous l'axe longitudinal (52) dans un état prêt au fonctionnement du dispositif (24), et qui est disposée à distance radiale du rotor (26), une région de passage (54) pour le produit récolté étant réalisée entre la région (30) du dispositif de séparation et la région périphérique inférieure (31) du rotor (26), la région (30) du dispositif de séparation s'étendant au moins dans une région partielle du rotor (26) le long de l'axe longitudinal (52), et au moins un élément de commande (48) qui est disposé au niveau de la région (30) du dispositif de séparation, la région (30) du dispositif de séparation présentant au moins un élément de panier (32) qui présente une pluralité d'ouvertures de séparation (58), l'élément de commande (48) pouvant être déplacé vers l'intérieur depuis un côté extérieur du dispositif de séparation (28) à travers au moins l'une des ouvertures de séparation (58) dans la région de passage (54) et/ou dans la projection axiale de la région de passage (54), le procédé présentant l'étape consistant à :
- déplacer vers l'intérieur l'au moins un élément de commande (48) dans la région de passage (54) et/ou dans une projection axiale de la région de passage (54) formée le long de l'axe longitudinal (52), afin de commander le flux de produit récolté.

15. Procédé selon la revendication 14, dans lequel le déplacement vers l'intérieur de l'au moins un élément de commande (48) présente les étapes consistant à :
- détecter au moins un paramètre de fonctionnement du dispositif (24), et
- déplacer radialement l'au moins un élément de commande (48) en fonction du paramètre de fonctionnement.
